# DEMANDE DE BREVET EUROPEEN

(11) **EP 1 069 670 A1**
(43) Date de publication de la demande: **17.01.2001**
(21) Numéro de dépôt: 99810614.0
(22) Date de dépôt: 12.07.1999
(51) Int. Cl.: H02K 37/18

(54) **Moteur électrique hybride**

(71) Demandeur: Société Industrielle de Sonceboz S.A., 2605 Sonceboz (CH)
(72) Inventeur: Urwyler, Jean-François, 2732 Reconviller (CH); Oudet, Claude, 25000 Besançon (FR)
(74) Mandataire: WILLIAM BLANC & CIE

(57) **Abrégé**

Le stator 1 du moteur décrit comporte un circuit magnétique (4) ayant plusieurs parties polaires (12) couplées, chacune, avec une bobine électrique correspondante (5). Le rotor (2) est constitué par un ensemble coaxial comprenant un aimant permanent en forme de disque annulaire et monté axialement, et deux parties polaires de rotor (telles que 6) disposées de part et d'autre du disque aimanté. Chaque partie polaire de rotor présente une denture (20) à pas uniforme, le parties polaires du stator ayant chacune plusieurs dents (14) sensiblement selon le même pas que les dents du rotor. Une dent du rotor (19) et une dent du stator (14), placées en regard, forment entre elles un entrefer sensiblement constant dont la longueur E, mesurée dans le sens radial du moteur, est choisie de façon que E = 4,28 µ₀ Uₙᵢ₍ₘₐₓ₎ /B₍ₘₐₓ₎ ± 25%, où µ₀ est la perméabilité du vide, Uₙᵢ₍ₘₐₓ₎ la différence de potentiel magnétique maximale engendrée par ladite bobine, cette bobine ayant n spires et étant parcourue par un courant i₍ₘₐₓ₎, et B₍ₘₐₓ₎ l'induction maximale autorisée dans l'entrefer pour éviter la saturation des dents sous l'effet de la différence de potentiel magnétique totale maximale U₍ₘₐₓ₎ aux bornes de l'entrefer qui résulte de l'addition de Uₙᵢ₍ₘₐₓ₎ et de la différence de potentiel de polarisation produite par ledit aimant permanent dans cet entrefer, l'aimant permanent étant choisi de façon que la différence de potentiel magnétique totale aux bornes de l'entrefer soit sensiblement égale ou peu inférieure au maximum U₍ₘₐₓ₎.

## Description

La présente invention concerne un moteur électrique di- ou polyphasé à aimant permanent de type moteur hybride. Un tel moteur comporte un rotor de forme générale cylindrique constitué par au moins un ensemble coaxial comprenant un aimant permanent en forme de disque annulaire, aimanté axialement, et de deux parties polaires de rotor magnétiquement perméables disposés de part et d'autre dudit disque, chaque partie polaire de rotor présentant une denture formée par des dents radiales disposées le long de sa périphérie en respectant un pas uniforme. Le moteur comporte un stator qui comprend une partie de circuit magnétique magnétiquement perméable, de forme générale annulaire, coaxiale par rapport au rotor, constituée d'une partie périphérique et de plusieurs parties polaires de stator. Chacune de ces parties polaires de stator présente une partie de corps couplé avec une bobine électrique et une ou plusieurs dents orientées radialement de façon à faire face à la denture du rotor. Les dents du stator sont disposées sensiblement selon le même pas que les dents du rotor, une dent du rotor et une dent du stator placées en regard formant entre elles un entrefer sensiblement constant.

De tels moteurs sont connus depuis plusieurs dizaines d'années et sont largement utilisés, notamment sous forme de moteurs pas-a-pas di-ou triphasés. Des descriptions de ces moteurs se trouvent par exemple dans le livre "Stepping motors and their microprocessor controls" par Takashi Kenio et Akira Sugavara, Clarendon Press, Oxford 1994, deuxième édition, pages 37 à 44 ou dans le Traité d'électricité de l'Ecole Polytechnique Fédérale de Lausanne, volume IX, "Electromécanique" par Marcel Jufer, Presses polytechniques et universitaires romandes, chapitre 11.2.11 Moteur reluctant polarisé. Ces moteurs ont fait l'objet de nombreuses études théoriques, cf. notamment l'article de Marcel Jufer et Gunter Heine "Hybrid stepper motor torque and inductance characteristics with saturation effects" paru dans "Incremental Motion Control Systems and Devices (IMCSD) Proceedings", Fifteenth Annual Symposium, 1986, pages 207 à 211, et les références citées dans cet article.

Dans la conception traditionnelle des moteurs hybrides, il est généralement admis que la longueur de l'entrefer entre deux dents en regard doit être la plus courte possible compte tenu des contraintes techniques découlant des tolérances de fabrication au niveau du diamètre, de la concentricité, du centrage, des bavures etc. Cette conception a été soutenue par la théorie. En effet, selon l'expression fondamentale bien connue pour calculer des forces ou des couples en électromagnétisme, un jeu de dents en déplacement relatif suivant le degré de liberté angulaire α engendre un couple C = 0,5 x d(perméance)/dα x U², U étant le potentiel magnétique total appliqué à ce jeu de dents, c'est-à-dire la somme algébrique du potentiel de polarisation Uₐ engendrée par l'aimant permanent et du potentiel Uni engendré par la bobine couplée avec ce jeux de dents. Or, le terme fondamental du développement en série de Fourier de cette variation de perméance augmente quand l'entrefer diminue. Le couple C, avant la saturation du circuit magnétique, étant proportionnel à ce terme, il était logique de choisir l'entrefer minimum compatible avec le procédé de fabrication.

Ainsi, dans un moteur pas-à-pas hybride de structure usuelle, en tenant compte du fait que la saturation d'un circuit magnétique de bonne qualité se produit pour une induction voisine de 2T et que l'induction maximale dans l'entrefer est voisine de l'induction dans les bouts de dents lorsque les dents du stator et du rotor sont en regard, il est souhaitable de dimensionner l'entrefer de telle sorte que l'induction due à la somme des potentiels Uₐ + Uₙᵢ soit voisine de 2T. On en déduit que l'entrefer E doit être sensiblement égal à E = µ₀ (Uₐ + Uₙᵢ)/2, où le coefficient µ₀ est égal à la perméabilité du vide. Dans le cas d'un moteur hybride d'une taille courante (taille 23, diamètre 57 mm), une bobine fournit par exemple, en régime permanent, un potentiel Uₙᵢ = 80 At . Le couple dû au courant étant maximal lorsque Uₐ = Uₙᵢ, on en déduit E = 0,07 mm. Une telle valeur implique des contraintes sévères au niveau des tolérances de fabrication.
Un des buts de l'invention est de fournir un moteur hybride qui soit optimisé par rapport au couple à fournir et agencé de façon à permettre une réduction sensible des coûts de fabrication.

Le moteur selon l'invention est notamment caractérisé en ce que la longueur E dudit entrefer, mesurée dans le sens radial du moteur, est choisie de façon que E = 4,28 µ₀ Uₙᵢ₍ₘₐₓ₎ /B₍ₘₐₓ₎ ± 25%, où µ₀ est la perméabilité du vide, Uₙᵢ₍ₘₐₓ₎ la différence de potentiel magnétique maximale engendrée par ladite bobine, cette bobine ayant n spires et étant parcourue par un courant i ₍ₘₐₓ₎, et B₍ₘₐₓ₎ l'induction maximale autorisée dans l'entrefer pour éviter la saturation des dents sous l'effet de la différence de potentiel magnétique totale maximale Uₘₐₓ aux bornes de l'entrefer qui résulte de l'addition de Uₙᵢ₍ₘₐₓ₎ et de la différence de potentiel de polarisation produite par ledit aimant permanent dans cet entrefer, et en ce que l'aimant permanent est choisi de façon que la différence de potentiel magnétique totale aux bornes de l'entrefer soit sensiblement égale ou peu inférieure au maximum U_{(max).}

Une étude approfondie des conditions de fonctionnement d'un moteur hybride a en effet révélé, de façon surprenante et à l'encontre de la tendance générale visant à réduire les entrefers, qu'il est au contraire avantageux, pour optimiser le moteur, d'augmenter les entrefers, moyennant une adaptation de l'aimant permanent de façon à créer une polarisation appropriée de la denture. Ainsi, le dimensionnement de l'entrefer selon l'invention, conduit, pour le moteur de l'exemple mentionné plus haut, à une valeur de 0,216 mm ± 25%, c'est-à-dire à une valeur nettement supérieure à celle de la technologie usuelle.

Des formes de réalisation particulières d'un moteur selon l'invention sont décrites dans les revendications 2 à 6. D'autre part, l'invention vise également des utilisations du présent moteur selon les revendications 7 et 8.
D'autres caractéristiques buts et avantages de l'invention ressortiront des revendications, de la description donnée ci-dessous et des dessins annexés. Dans ces dessins qui illustrent, à titre d'exemple, une forme de réalisation d'un moteur selon l'invention et son dimensionnement,
la Fig. 1 est une vue en coupe axiale selon un plan I-I de la Fig. 2,
la Fig. 2 est une vue de face, dans le sens axial, du moteur de la Fig. 1, et
la Fig. 3 est un détail agrandi d'une partie de la denture de ce moteur.

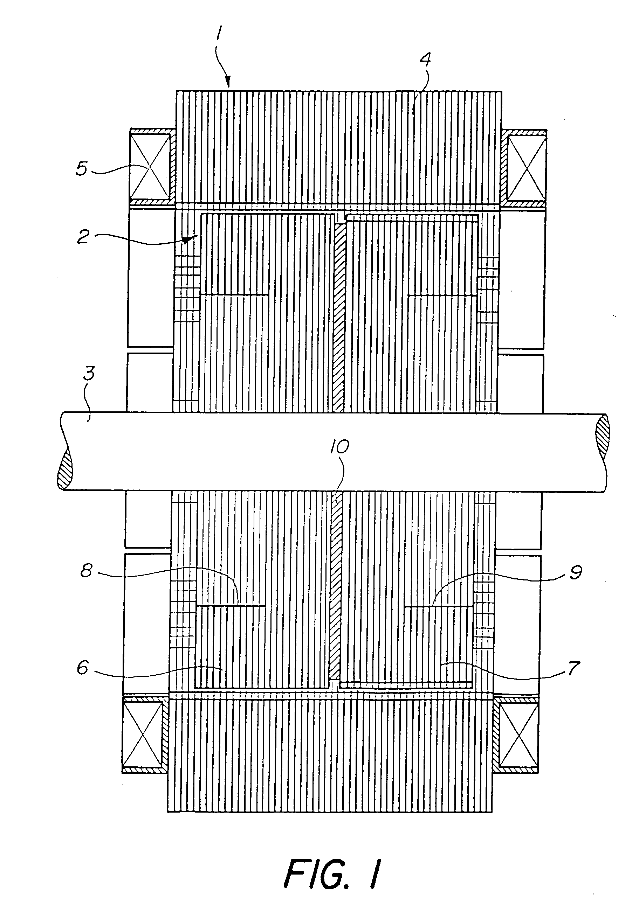

Selon la Fig. 1, le moteur selon l'invention comporte un stator désigné dans son ensemble par 1 et un rotor 2 monté sur un axe 3. L'axe 3 est logé dans des paliers non représentés, supportés dans un boîtier du moteur également non représenté qui assure le centrage de l'axe 3 par rapport au stator 1.

Le stator 1 comprend une partie de circuit magnétique 4 réalisée par exemple par un empilage de tôles en fer-silicium. Des bobines électriques telles que 5 sont montées sur ce stator de la manière décrite plus loin. Le rotor 2 comporte deux parties polaires 6 et 7 constituées chacune par exemple par un empilement de tôles en fer-silicium, ces parties polaires présentant des creusures coaxiales respectives 8 et 9, notamment pour réduire l'inertie du rotor tout en n'affectant pas ses propriétés magnétiques. Un aimant permanent en forme de disque annulaire 10 est disposé entre les parties polaires 6 et 7 de manière à former un ensemble coaxial solidaire de l'axe 3. L'aimant 10 est aimanté dans le sens axial et son épaisseur dans ce sens est très faible par rapport à son diamètre extérieur.

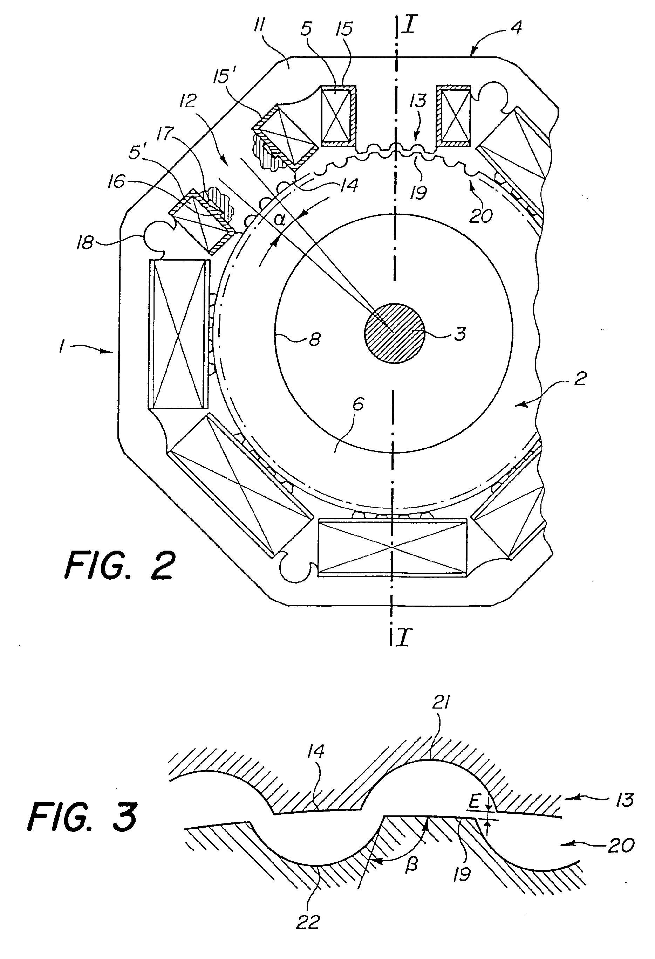

La Fig. 2 montre l'ensemble stator et rotor en vue dans le sens axial. Selon cette figure, la partie de circuit magnétique 4 du stator 1 comporte une partie essentiellement annulaire 11 et plusieurs parties polaires telles que 12, dirigées radialement vers l'intérieur du stator. Chacune des parties polaires 12 présente une partie de corps et une denture 13 formée de plusieurs dents telles que 14. Des bobines électriques telles que 5, 5', etc... sont préfabriquées sur des supports isolants tels que 15, 15' et sont montés sur les parties de corps de parties polaires correspondantes. Ces parties polaires ont une longueur uniforme dans le sens axial et une largeur uniforme dans le plan radial du moteur, de sorte que les ensembles bobine-support isolant peuvent être mis en place sur les parties polaires par l'intérieur du stator. Les supports isolants 15, 15' etc... qui présentent une certaine élasticité peuvent être munis sur leur côté intérieur de parties saillantes telles que 16 agencées pour pénétrer dans des encoches correspondantes telles que 17 sur le flanc des parties polaires de manière à ce que les bobines soient retenues sur ces parties polaires. La forme de ces parties polaires et notamment l'absence d'épanouissements au niveau de la denture permet le montage décrit par lequel on évite la nécessité d'un bobinage in situ nettement plus compliqué et onéreux.

La forme extérieure de la partie 4 montré à la Fig. 2 est octogonale, en coupe transversale, le stator comportant en l'occurence huit parties polaires telles que 12. Une telle forme polygonale permet de prévoir des ouvertures ou alésages de fixation et de centrage tels que 18 dans des angles du polygone, évitant ainsi un affaiblissement du circuit magnétique et le risque correspondant d'une saturation à l'endroit d'une section réduite.

Le rotor 2 présente à sa périphérie une série de dents 19 formant une denture de pas uniforme 20.

La Fig. 3 montre un détail de la denture 20 du rotor placée face à la denture 13 d'une partie polaire du stator. La forme et la dimension des dents telles que 14 et 19 et des parties creuses adjacentes respectives 21 et 22 sont pratiquement les mêmes. Deux dents placées en regard l'une de l'autre forment entre-elles un entrefer de longueur E dans le sens radial, la valeur de E étant faible par rapport à la hauteur des dents. La particularité des dentures représentés à la Fig. 3 consiste notamment en la forme des creusures 21, 22 qui est essentiellement circulaire dans le plan radial du moteur, l'angle β formé entre les tangentes au profil des dents sur les coins de celles-ci ayant une valeur d'environ 110°, soit une valeur comprise entre 100° et 115°. Une telle forme s'est avérée particulièrement avantageuse lorsqu'on est en présence d'une induction élevée, la perte de potentiel dans les bouts de dents se trouvant sensiblement réduites. La denture étant réalisée généralement par découpage, elle subit de très fortes contraintes mécaniques lors de sa fabrication ce qui amène une baisse permanente des propriétés magnétiques du matériau utilisé. Les parties creuses circulaires d'un rayon relativement grand fournissent l'avantage d'une moindre détérioration de la perméabilité magnétique du matériau. L'efficacité de la denture se trouve quelque peu réduite par la réduction de la variation de reluctance, ce qui entraîne une certaine baisse de couple à faible courant, mais le couple pour le potentiel magnétique nominal engendré par le courant électrique dépasse celui d'une denture usuelle à profil rectangulaire ou trapézoïdal.

Selon une variante, utile notamment pour de grands entrefers, les creusures entre les dents peuvent avoir une forme essentiellement parabolique, ce qui permet d'obtenir des creusures plus profondes tout en gardant un angle β de 100 à 115° et en évitant les angles du fond d'une denture trapézoïdale.

Le dimensionnement de l'entrefer selon l'invention repose sur la considération de la variation du couple d'un moteur hybride en fonction de la longueur de l'entrefer entre des dents en regard pour une différence de potentiel magnétique maximale donnée engendrée par une bobine dont le flux passe dans ledit entrefer. Cette différence de potentiel est limitée par la valeur maximale du courant que le moteur peut supporter soit en régime permanent soit en régime de pourcentage de marche réduit, cette dernière valeur du courant pouvant être un multiple du courant maximal en régime permanent. La variation de couple en fonction de l'entrefer s'avère être relativement faible à proximité d'un maximum qui se situe à des valeurs de l'entrefer nettement plus grandes que les valeurs habituelles. La différence de potentiel maximale totale dans l'entrefer qui correspond à l'induction maximale dans le circuit magnétique, notamment au niveau des dentures, permettant d'éviter la saturation du matériau ferromagnétique utilisé est la somme du potentiel de polarisation et du potentiel magnétique dû à la bobine. La variation de la différence de potentiel maximale en fonction de la longueur de l'entrefer est représentée par une droite. Si on respecte cette fonction, pour chaque valeur du potentiel maximal de bobine on peut tracer une courbe de couple en fonction de l'entrefer. Cette courbe de couple comporte un maximum déjà mentionné pour une valeur particulière d'entrefer; mais cet entrefer n'est pas critique. Il lui correspond une zone à faible variation de couple, en particulier une zone à faible diminution de couple pour un entrefer inférieur au maximum, et ce malgré la variation rapide du potentiel maximal qui décroît proportionnellement à ce même entrefer. On choisit l'aimant permanent de façon à atteindre la valeur maximale de l'induction totale dans l'entrefer pour la différence de potentiel correspondant au courant maximal autorisé, en fonction d'une longueur d'entrefer qui se situe avantageusement en-dessous de la valeur correspondant au maximum du couple.

Dans le cas du moteur mentionné plus haut, le maximum de couple pour une différence de potentiel Uₙᵢ = 80 At est atteint avec un entrefer de 0,27 mm. A cette valeur, l'aimant permanent devrait fournir, aux extrémités de cet entrefer, un potentiel de polarisation de 350 At. Toutefois, étant donné la variation susmentionnée de la valeur totale maximale du potentiel magnétique dans l'entrefer en fonction de l'entrefer, il s'avère avantageux de choisir l'entrefer de façon à réduire le potentiel de polarisation nécessaire, tout en restant à proximité de la valeur maximale du couple. Par exemple, on choisissant E = 0,2 mm au lieu de 0,27 mm, l'aimant doit fournir une polarisation de seulement 240 At, alors que le couple ne se trouve réduit que de moins de 2% par rapport au maximum théorique. Le choix d'une polarisation inférieure à la valeur au maximum du couple permet de réduire le coût le l'aimant ainsi que le couple parasitaire de détente correspondant à l'harmonique 2P, P étant le nombre de phases du moteur. Il est à noter que le potentiel de polarisation nécessaire s'obtient facilement avec un aimant NdFeB qui, dans le cas de l'exemple de moteur cité, soit un moteur diphasé comportant un total de 4 pôles de stator par phase, peut avoir une épaisseur de l'ordre de 1,5 mm en travaillant au voisinage de son point de (BH) maximum. On ajuste ce point de fonctionnement par la longueur des pôles du rotor dans le sens axial et par la surface de l'aimant.

Un moteur hybride selon l'invention peut être utilisé avantageusement comme moteur d'asservissement, c'est-à-dire un moteur commandé en boucle fermée. Dans ce cas, le capteur associé au moteur et la boucle d'asservissement fournissent la qualité de positionnement. En revanche on demande au moteur de fournir un couple proportionnel au courant dans un large domaine pouvant aller jusqu'à des puissances électriques appliqués dix fois supérieures à la puissance que le moteur peut supporter en régime permanent. Ainsi les courants crêtes peuvent être au moins trois fois supérieurs au courant nominal du moteur et fournir par exemple une différence de potentiel de 240 At. Le maximum de couple, dans l'exemple du moteur mentionné plus haut, est alors obtenu pour un entrefer de 0,8 mm. Pour cette valeur, le potentiel de polarisation est de 1.043 At. On se placera, dans ce cas également un peu en dessous du maximum en choisissant par exemple E = 0,6mm. Le potentiel de polarisation nécessaire n'est alors plus que de 715 At.

Il est à noter que le moteur hybride est un moteur dont la vitesse de montée en puissance mécanique est élevée. Ce moteur se prête ainsi particulièrement bien comme moteur d'asservissement et cette qualité peut être utilisée dans un moteur selon l'invention du fait que celui-ci permet d'atteindre des niveaux de courant qui sont un multiple du courant pour lequel un moteur hybride usuel serait déjà totalement saturé.

Dans le présent moteur, il est particulièrement avantageux de prendre des mesures pour réduire le couple de détente parasite car celui-ci croit avec le carré du potentiel de polarisation. Pour ce faire, dans le cas d'un moteur dont les parties polaires de stator comportent un nombre de dents pair, on choisit l'espacement angulaire α entre les plans radiaux médians de dents voisines du plan radial médiant de chaque partie de façon que α = (2π + π/2P)/N, P étant le nombre de phases du moteur et N le nombre de dents du rotor.

L'augmentation de la longueur de l'entrefer dans le présent moteur permet, outre des tolérances de fabrication moins étroites que dans le cas des moteurs usuels, d'obtenir de nombreux avantages au niveau de la fabrication tels que par exemple le fait de pouvoir aimanter l'aimant permanent du rotor alors qu'il se trouve à l'extérieur du stator. Une telle aimantation peut permettre de mieux saturer l'aimant et d'éviter des déformations permanentes dues au choc au moment de l'aimantation in situ. Mais surtout, il devient possible, grâce à une aimantation à l'extérieur du stator, de réaliser le rotor d'un moteur comportant deux ensembles formés chacun d'un aimant et de ses parties polaires, sous la forme d'une succession, dans le sens axial, d'une partie polaire extérieure, d'un premier aimant, de deux parties polaires centrales accolées, d'un second aimant et d'une partie polaire extérieure. L'aimantation des aimants pouvant être, dans ce cas, de sens opposé, les parties polaires centrales auront la même polarité, par exemple Nord, et les parties polaires extérieures feront apparaître des pôles Sud. Il n'y a ainsi pas de fuites magnétiques entre les extrémités du rotor et il n'est pas nécessaire de séparer magnétiquement les parties polaires centrales comme dans le cas d'une aimantation du rotor dans un moteur assemblé, où les parties polaires centrales ont des polarités opposées.

On peut également mentionner l'avantage de l'invention dans le cas où elle conduit à un entrefer suffisamment grand pour permettre de découper les tôles constituant le rotor et le stator en même temps. Il en résulte une simplification de la fabrication et une économie de matière importants.

D'autres possibilités et avantages apparaîtront à l'homme de métier tant au niveau de la fabrication que de l'utilisation du moteur selon l'invention.

## Revendications

1. Moteur électrique di- ou polyphasé à aimant permanent, du type moteur hybride, comportant un rotor (2) de forme générale cylindrique constitué par au moins un ensemble coaxial comprenant un aimant permanent (10) en forme de disque annulaire, aimanté axialement, et de deux parties polaires de rotor (6, 7) magnétiquement perméables, disposées de part et d'autre dudit disque, chaque partie polaire de rotor présentant une denture (20) formée par des dents radiales (19) disposées le long de sa périphérie en respectant un pas uniforme, ce moteur comportant un stator (1) qui comprend une partie de circuit magnétique (4) magnétiquement perméable, de forme générale annulaire, coaxiale par rapport au rotor, constituée d'une partie périphérique (11) et de plusieurs parties polaires de stator (12), chacune de ces parties polaires de stator présentant une partie de corps couplée avec une bobine électrique (5) et une ou plusieurs dents (14) orientées radialement de façon à faire face à la denture du rotor, les dents du stator étant disposées sensiblement selon le même pas que les dents du rotor, une dent du rotor (1a) et une dent du stator (14) placées en regard formant entre elles un entrefer sensiblement constant, caractérisé en ce que la longueur E dudit entrefer, mesurée dans le sens radial du moteur, est choisie de façon que E = 4,28 µ₀ Uₙᵢ₍ₘₐₓ₎ /B₍ₘₐₓ₎ ± 25%, où µ₀ est la perméabilité du vide, Uₙᵢ₍ₘₐₓ₎ la différence de potentiel magnétique maximale engendrée par ladite bobine, cette bobine ayant n spires et étant parcourue par un courant i ₍ₘₐₓ₎, et B₍ₘₐₓ₎ l'induction maximale autorisée dans l'entrefer pour éviter la saturation des dents sous l'effet de la différence de potentiel magnétique totale maximale Uₘₐₓ aux bornes de l'entrefer qui résulte de l'addition de Uₙᵢ₍ₘₐₓ₎ et de la différence de potentiel de polarisation produite par ledit aimant permanent dans cet entrefer, et en ce que l'aimant permanent (10) est choisi de façon que la différence de potentiel magnétique totale aux bornes de l'entrefer soit sensiblement égale ou peu inférieure au maximum U₍ₘₐₓ₎.

2. Moteur selon la revendication 1 dans lequel chaque partie polaire du stator comporte un nombre de dents pair, caractérisé en ce que l'espacement angulaire α entre les plans radiaux médians des deux dents voisines du plan radial médian de chaque partie polaire, est égal à α = (2π + π/2P)/N, où P est le nombre de phases du moteur et N le nombre de dents du rotor.

3. Moteur selon la revendication 1 ou la revendication 2, caractérisé en ce que ledit aimant permanent (10) est un aimant à haute énergie dont l'épaisseur dans le sens axial est très faible par rapport à son diamètre extérieur, ce diamètre extérieur et la longueur des parties polaires du rotor dans le sens axial étant tels que le point de travail de l'aimant se situe au voisinage de son point de (BH) maximum, B étant l'induction et H le champ magnétique dans l'aimant.

4. Moteur selon l'une des revendications précédentes, caractérisé en ce que les creusures (21, 22) entre les dents du stator et entre les dents du rotor ont, en section par un plan radial, une forme essentiellement circulaire ou parabolique, l'angle formé entre les tangentes au profil des dents sur les coins de celles-ci ayant une valeur situé entre 100° et 115°, de préférence une valeur d'environ 110°.

5. Moteur selon l'une des revendications précédentes, caractérisé en ce que les parties polaires de stator (12) ont, dans le sens axial, une longueur uniforme et, dans un plan radial, une largeur uniforme, et en ce que les bobines (5) sont des bobines préfabriquées sur des supports isolants (15), ces bobines et les parties polaires de stator étant agencées de façon à permettre la mise en place de ces bobines préfabriquées sur lesdites parties polaires de stator.

6. Moteur selon l'une des revendications précédentes, caractérisé en ce que la partie périphérique du stator (11) présente, en coupe par un plan radial, une forme extérieure polygonale, les côtés de ce polygone se situant aux emplacements des parties polaires de stator (12), des ouvertures (18) ou alésages de fixation et de centrage, parallèles à l'axe du moteur, se situant dans des angles dudit polygone.

7. Utilisation du moteur selon l'une des revendications précédentes comme moteur pas-à-pas commandé en boucle ouverte, caractérisée en ce que le courant i₍ₘₐₓ₎ est le courant nominal du moteur que chaque bobine supporte en régime permanent.

8. Utilisation du moteur selon l'une des revendications 1 à 6 comme moteur commandé en boucle d'asservissement fermée, caractérisée en ce que le courant i₍ₘₐₓ₎ est le courant crête applicable à chaque bobine en régime à pourcentage de marche réduit.
